(19) Europäisches Patentamt / European Patent Office / Office européen des brevets

(11) **EP 1 734 823 B2**

(12) **NEW EUROPEAN PATENT SPECIFICATION**
After opposition procedure

(45) Date of publication and mention
of the opposition decision:
**22.02.2017 Bulletin 2017/08**

(45) Mention of the grant of the patent:
**15.10.2008 Bulletin 2008/42**

(21) Application number: **05731882.6**

(22) Date of filing: **30.03.2005**

(51) Int Cl.:
***A01N 43/50*** (2006.01)

(86) International application number:
**PCT/EP2005/003302**

(87) International publication number:
**WO 2005/096814 (20.10.2005 Gazette 2005/42)**

(54) **SYNERGISTICALLY ACTING HERBICIDAL MIXTURES**

SYNERGISTISCHE HERBIZIDMISCHUNGEN

MÉLANGES HERBICIDES À ACTION SYNERGIQUE

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR MK YU**

(30) Priority: **01.04.2004 US 558131 P**

(43) Date of publication of application:
**27.12.2006 Bulletin 2006/52**

(60) Divisional application:
**08160242.7 / 1 980 149**
**10183866.2 / 2 272 350**
**10183875.3 / 2 272 349**

(73) Proprietor: **BASF Agrochemical Products, B.V.**
**6835 EA Arnhem (NL)**

(72) Inventors:
• **SIEVERNICH, Bernd**
**67454 Hassloch (DE)**
• **BRIX, Horst, Dieter**
**76829 Landau (DE)**
• **MALEFYT, Tim**
**Stroudsburg, PA 18360 (US)**

(56) References cited:
WO-A-2004/008861    US-A- 5 905 059
US-A- 5 981 432    US-B1- 6 677 276

• DATABASE CA [Online] CHEMICAL ABSTRACTS SERVICE, COLUMBUS, OHIO, US; SCOTT, ROBERT C. ET AL: "Synergism of grass weed control with postemergence combinations of SAN 582 and fluazifop-P, imazethapyr, or sethoxydim" XP002347122 retrieved from STN Database accession no. 1998:515096 & WEED TECHNOLOGY , 12(2), 268-274 CODEN: WETEE9; ISSN: 0890-037X, 1998,

• DATABASE CA [Online] CHEMICAL ABSTRACTS SERVICE, COLUMBUS, OHIO, US; ARNOLD, RICHARD N. ET AL: "Weed control in pinto beans (Phaseolus vulgaris) with imazethapyr combinations" XP002347123 retrieved from STN Database accession no. 1994:127699 & WEED TECHNOLOGY , 7(2), 361-4 CODEN: WETEE9; ISSN: 0890-037X, 1993,

• DATABASE CA [Online] CHEMICAL ABSTRACTS SERVICE, COLUMBUS, OHIO, US; RICHBURG, JOHN S. III ET AL: "Weed management in peanut (Arachis hypogaea) with imazethapyr and metolachlor" XP002347124 retrieved from STN Database accession no. 1996:125326 & WEED TECHNOLOGY , 9(4), 807-12 CODEN: WETEE9; ISSN: 0890-037X, 1995,

• DATABASE CA [Online] CHEMICAL ABSTRACTS SERVICE, COLUMBUS, OHIO, US; BUHLER, DOUGLAS D. ET AL: "Weed control from imazaquin and metolachlor in no-till soybeans (Glycine max)" XP002347125 retrieved from STN Database accession no. 1989:452374 & WEED SCIENCE , 37(3), 392-9 CODEN: WEESA6; ISSN: 0043-1745, 1989,

• DATABASE CA [Online] CHEMICAL ABSTRACTS SERVICE, COLUMBUS, OHIO, US; JOHNSON, WILLIAM G. ET AL: "Weed control with reduced rates of imazaquin and imazethapyr in no-till narrow-row soybean (Glycine max)" XP002347126 retrieved from STN Database accession no. 1998:156252 & WEED SCIENCE , 46(1), 105-110 CODEN: WEESA6; ISSN: 0043-1745, 1998,

• C. D. S. TOMLIN: 'The Pesticide Manual', vol. 13, 2003, BRITISH CROP PRODUCTION COUNCIL, HAMPSHIRE pages 641-642 - 668-669

• MacDonald et al., AC 299,263 tank-mixes preplant incorporated, Res.Rep.Expert Comm. Weeds East.Can. (38 Meet., Vol. 1,618-19, 1993)

**Description**

The present invention relates to a synergistic herbicidal mixture consisting of

A) Imazamox, including its respective isomers a s well as its respective environmentally compatible salts or esters or amides or other derivatives; and

B) at least one herbicidal compound of the group of chloro acetamides, which is selected from the group consisting of metazachlor, dimethachlor and pethoxamid,

and, if desired,

C) at least one herbicidal compound selected from the group consisting of clomazone, atrazin, dichlormid, benoxacor, LAB-145138, MG-191, MON-13900, cyometrinil, oxabetrinil, fluxofenim, flurazole, naphtalicacidanhydride, fenchlorim, fenchlorazol, mefenpyr, cloquintocet (including its hydrate(s)), 1-ethyl-4-hydroxy-3-(1*H*-tetrazol-5-yl)-1*H*-quinolin-2-one, 4-carboxymethyl-chroman-4-carboxylic acid, *N*-(2-methoxybenzoyl)-4-(3-methyl-ureido)-benzenesulfonamide, (3-oxo-isothiochroman-4-ylidenemethoxy)-acetic acid methyl ester including their respective isomers as well as their respective environmentally compatible salts or esters or amides or other derivatives.

The invention furthermore relates to herbicidal compositions comprising a herbicidally active amount of a synergistic herbicidal mixture as defined above and at least one liquid and/or solid carrier and, if desired, at least one further additive.

Moreover, the invention relates to a method of controlling undesirable vegetation by using above defined synergistic herbicidal mixture.

In crop protection products, it is always desirable to increase the specific activity and/or selectivity of an active ingredient and the reliability of action.

However, the activity and/or the selectivity of herbicides depends on a large number of factors e.g. type of the herbicide, amount of the herbicide, formulation of the herbicide, the type of weed, the combination of crop and weed, climate, soil, etc.

In many cases herbicides have an effect against a broad spectrum of weeds, however do not fight a certain type of other weeds, which is also present in the crop cultures to be protected.

Sometimes these obstacles can be overcome by using just bigger amounts of herbicide, however this is economically disadvantageous and may also reduce the selectivity of the herbicide, in other words may lead to damage of the crop to be protected.

It is a general desire in the application of agrochemicals to reduce their amount on one side and to broaden their ability to fight different weeds - which grow in certain crop cultures - without damaging the crop cultures on the other side.

This desire may be satisfied by combination of different herbicides having a different activity profile versus undesired weeds.

However, because of the huge number of herbicide active ingredients known in the art and the many factors which influence the activity and selectivity of herbicides it is virtually impossible to create the appropriate mixture just by doing some mixture experiments.

Therefore it is always a challenge to find an appropriate herbicide or herbicide mixture which fights a certain group of weeds in a certain crop culture.

WO 00/08938 A1 (now EP 1 104 241 B1, Bayer CropScience) describes the use of herbicide combinations for fighting weeds in herbicide resistant oilseed rape. Certain herbicidal compositions as such are also described. Respective herbicides are to be selected from four different groups and are to be combined with herbicides to be selected from five other groups. The gist of WO 00/08938 A1 is the combination of glyphosate or glufosinate with other co herbicides.

The herbicide combinations of the instant application as well as their use as described in the instant application are not disclosed in WO 00/08938 A1.

It is an object of the present invention to increase the activity and/or selectivity of herbicides against undesirable harmful plants, in particular in certain crops (e.g. oilseed rape, canola (brassica napus)), without damaging these crops.

We have found that this object is achieved by the mixtures defined at the outset. We have furthermore found herbicidal compositions which comprise these mixtures, and methods of controlling undesirable vegetation.

The mixtures according to the invention show a synergistic effect; the compatibility of the herbicidally active compounds of components A), B) and, if desired C) for certain crop plants is generally retained.

The compounds which are embraced by component A) are the following.

Herbicidal imidazolinones are known e.g. from C.D.S. Tomlin, "The Pesticide Manual", 13th Edition, BCPC (2003), Index 5, 1337-1344 andhttp://www.hclrss.demon.co.uk/index_cn_frame.html.

The synergistic herbicidal mixture of the invention may contain imazamox as its

a) salts, e.g. salts of alkaline or earth alkaline metals or ammonium or organoammonium salts, for instance, sodium, pottasium, ammonium, isopropyl ammonium etc.; b) respective isomers, e.g. stereo isomers such as the respective enantiomers, in particular the respective R-or S-enantiomers (including salts, ester, amides), c) respective esters, e.g. carboxylic acid $C_1$-$C_8$-(branched or non-branched) alkyl esters, such as methylesters, ethylesters, iso propyl esters, d) respective amides, e.g. carboxylic acid amides or carboxylic acid $C_1$-$C_8$-(branched or non-branched) mono or di alkyl amides, such as dimethylamides, diethylamides, di isopropyl amides or e) any other derivative which contains the above imidazolinone structures as structural moiety.

Very suitable is R-imazamox. This compound is known e.g. from US 5,973,154 B (American Cyanamid Company) and US 6,339,158 B1 (American Cyanamid Company).

The compounds which are embraced by component B) are the following.

Chloro acetamides selected from the group of metazachlor, dimethachlor, and pethoxamid are described in C.D.S. Tomlin, "The Pesticide Manual", 13th Edition, BCPC (2003), Index 5, 1337-1344 andhttp://www.hclrss.demon.co.uklindex_cn_frame.html.

Metazachlor herein shall mean 2-Chloro-(2',6'-dimethyl-N-pyrazol-1-yl-methyl)-acetamid in all of his crystal modifications, in particular the monoclinic Metazachlor which is described in EP 0 411 408 A (BASF Aktiengesellschaft).

Preferred component B) comprises Metazachlor, in particular monoclinic Metazachlor.

A very preferred component B) is Metazachlor, in particular monoclinic Metazachlor.

Further components C) may be selected from the group consisting of clomazone, atrazine (see C.D.S. Tomlin, "The Pesticide Manual", 13th Edition, BCPC (2003), Index 5,1337-1344 and http://www.hclrss.demon.co.uk/index_cn_frame.html) and the following compounds which usually function as "safeners", dichlormid, benoxacor, LAB-145138, MG-191, MON-13900, cyometrinil, oxabetrinil, fluxofenim, flurazole, naphtalicacidanhydride, fenchlorim, fenchlorazol, cloquintocet (including its esters and hydrate(s)), as described in "Herbizide [Herbicides]", Hock, Fedtke, Schmidt, 1st edition, Thieme 1995 (s. "Dichlormid" p.263, "Benoxacor" p.263, "LAB-145138" p.263, "MG-191" p.263, "MON-13900" p.263, "Cyometrinil" p.265, "Oxabetrinil" p.265, "Fluxofenim" p.265, "Flurazole" p.265, "Naphtalicacidanhydride" p.265, "Fenchlorim" p.266, "Fenchlorazol" p.266 Isoxadifen, "Cloquintocet" p.266], or C.D.S. Tomlin, "The Pesticide Manual", 13th Edition, BCPC (2003), Index 5,1337-1344 and http://www.hclrss.demon.co.uk/index_cn_frame.html e.g. mefenpyr-diethyl, isoxadifen, 1-ethyl-4-hydroxy-3-(1*H*-tetrazol-5-yl)-1*H*-quinolin-2-one, 4-carboxymethyl-chroman-4-carboxylic acid, *N*-(2-methoxy-benzoyl)-4-(3-methyl-ureido)-benzenesulfonamide, (3-oxo-isothiochroman-4-ylidenemethoxy)-acetic acid methyl ester, all of these including their respective isomers as well as their respective environmentally compatible salts or esters or amides or other derivatives.

Preferred other components C) are clomazone, atrazin and the safeners cloquintocet (including its esters and hydrate(s)).

Preferred herbicidal mixtures or combinations according to the invention are the following

(M1) Imazamox + Metazachlor (monoclinic or triclinic or any mixture of those)

(M1-1) R-Imazamox + Metazachlor which contains at least 90 weight-% of the monoclinic form
(M1-2) R-Imazamox + Metazachlor (monoclinic or triclinic or any mixture of those)

(M4) Imazamox + Metazachlor (monoclinic or triclinic or any mixture of those) + clomazone

(M4-1) R-Imazamox + Metazachlor which contains at least 90 weight-% of the monoclinic form + clomazone

The present invention also extends to herbicidal compositions which comprise a herbicidally active amount of a synergistic herbicidal mixture (comprising components A), B) and, if desired, C) as described above), at least one liquid and/or solid carrier and, if desired, at least one further additive, for example a surfactant, adjuvant or others.

The herbicidal compositions and synergistic herbicidal mixtures according to the invention can effect very good control of broad-leaved weeds and grass weeds in many crops for example maize, cereals (for example wheat), brassica napus (canola, oilseed rape), sunflower, legumes, sugar cane, and soya without damaging the crop plants, an effect observed especially even at low rates of application.

Taking into consideration the variety of application method in question, the herbicidal compositions and synergistic herbicidal mixtures according to the invention can additionally be employed in a further number of crop plants for eliminating undesirable plants.

The herbicidal compositions and synergistic herbicidal mixtures according to the invention can preferably be used in crops which tolerate and/or are resistant to the action of ALS herbicides, preferably those ALS herbicides according to the invention. The resistance and or tolerance to said herbicides may be achieved by conventional breeding and/or by genetic engineering methods.

Crops which are tolerant to herbicides (e.g. tolerant to imidazolinone herbicides) are known for example from EP 0 154 204 A (MGI Pharma Inc.). Such crops are for example marketed by BASF under the trade name CLEARFIELD. Examples for such crops are maize, brassica napus (canola, oilseed rape), sunflower, rice, lentils and wheat.

Most preferable herbicide tolerant or herbicide resistant crops according to the invention is oilseed rape, canola (brassica napus).

The herbicidal mixtures or compositions according to the invention containing imazamox and chloro acetamides (for example those as disclosed under M1, M1-1, M 1-2, M4, and M4-1 are very suitable for fighting or controlling a broad spectrum of grasses and broadleaf weeds which are accompanying in general the abovementioned crops, e.g. in particular brassica napus (oil seed rape, canola).

Very preferably the weeds in ALS-herbicide resistant or tolerant brassica napus (oilseed rape, canola) are fighted by the herbicidal mixtures or compositions according to the invention - for example the mixtures of imazamox and chloro acetamides as disclosed under M1, M1-1, M1-2, M4, and M4-1 above and in particular those mixtures or compositions comprising imazamox and metazachlor. Those weeds include but are not limited to the following plant species:

Alopecurus myosuroides; Apera spica-venti; Avena spec.; Brassica spec.; Capsella bursa-pastoris; Galium aparine; Lamium spec.; Raphanus spec.; Sinapis spec.; Sisymbrium officinale; Stellaria media; Thlaspi arvense. Veronica spec.

Very suitable ALS resistant or tolerant crop / to be controlled weed / herbicide mixture (composition) combinations are the following. Controlled weeds include but are not limited to the listed plant species.

| ALS tolerant crop | Herbicide Mixture | Weed (Latin name) |
| --- | --- | --- |
| Canola | Imazamox+Metazachlor | Agropyron repens |
| | | Geranium pussilum |
| | | Sinapis alba |
| | | Sisymbrium officinale |
| Canola | Imazamox+Metazachlor +clomazone | Agropyron repens |
| | | Galium aparine |
| | | Geranium pussilum |
| | | Sinapis alba |
| | | Sisymbrium officinale |

The mixtures according to the invention, or the herbicidal compositions comprising them, can be employed, for example, in the form of directly sprayable aqueous solutions, powders, suspensions, also highly-concentrated aqueous, oily or other suspensions or dispersions, emulsions, oil dispersions, pastes, dusts, materials for spreading or granules, by means of spraying, atomizing, dusting, spreading or pouring.

The use forms depend on the intended purposes; in any case, they should guarantee the finest possible distribution of the active ingredients according to the invention.

Suitable inert additives (auxiliaries) are mineral oil fractions of medium to high boiling point such as kerosene and diesel oil, furthermore coal tar oils and oils of vegetable or animal origin, aliphatic, cyclic and aromatic hydrocarbons, e.g. paraffins, tetrahydronaphthalene, alkylated naphthalenes and their derivatives, alkylated benzenes and their derivatives, alcohols such as methanol, ethanol, propanol, butanol and cyclohexanol, ketones such as cyclohexanone, strongly polar solvents, such as N-methylpyrrolidone and water.

Aqueous use forms can be prepared from emulsion concentrates, suspensions, pastes, wettable powders or water-dispersible granules by adding water. To prepare emulsions, pastes or oil dispersions, the substances, as such or dissolved in an oil or solvent, can be homogenized in water by means of wetting agent, tackifier, dispersant or emulsifier. However, it is also possible to prepare concentrates composed of active substance, wetting agent, tackifier, dispersant or emulsifier and, if appropriate, solvent or oil, and these concentrates are suitable for dilution with water.

Suitable surfactants are the alkali metal, alkaline earth metal and ammonium salts of aromatic sulfonic acids, e.g. ligno-, phenol-, naphthalene- and dibutylnaphthalenesulfonic acid, and of fatty acids, of alkyl- and alkylaryl sulfonates, of alkyl sulfates, lauryl ether sulfates and fatty alcohol sulfates, and salts of sulfated hexa-, hepta- and octa-decanols, and of fatty alcohol glycol ether, condensates of sulfonated naphthalene and its derivatives with formaldehyde, condensates of naphthalene, or of the naphthalenesulfonic acids, with phenol and formaldehyde, polyoxyethylene octylphenyl ether, ethoxylated isooctyl-, octyl- or nonylphenol, alkylphenyl and tributylphenyl polyglycol ether, alkylaryl polyether alcohols, isotridecyl alcohol, fatty alcohol/ethylene oxide condensates, ethoxylated castor oil, polyoxyethylene alkyl ethers or polyoxypropylene alkyl ethers, lauryl alcohol polyglycol ether acetate, sorbitol esters, lignin-sulfite waste liquors or methylcellulose.

Powders, materials for spreading and dusts can be prepared by mixing or concomitantly grinding the synergistic herbicidal mixture or the individual active ingredients with a solid carrier.

Granules, e.g. coated granules, impregnated granules and homogeneous granules, can be prepared by binding the active ingredients to solid carriers. Solid carriers are mineral earths such as silicas, silica gels, silicates, talc, kaolin, limestone, lime, chalk, bole, loess, clay, dolomite, diatomaceous-earth, calcium sulfate, magnesium sulfate, magnesium oxide, ground synthetic material, fertilizers such as ammonium sulfate, ammonium phosphate, ammonium nitrate, ureas and products of vegetable origin such as cereal meal, tree bark meal, wood meal and nutshell meal, cellulose powders or other solid carriers.

The concentrations of the mixtures according to the invention in the ready-to-use products can be varied within wide ranges. In general, the formulations comprise from 0.01 to 95% by weight, preferably 0.5 to 90% by weight, of the mixture according to the invention.

The components A) and B) and, if desired, C) can be formulated jointly, but also separately, and/or applied to the plants, their environment and/or seeds jointly or separately. It is preferable to apply the active ingredients simultaneously. However, it is also possible to apply them separately.

Moreover, it may be advantageous to apply the herbicidal compositions and synergistic herbicidal mixtures according to the invention, jointly or separately, with additional other crop protection agents, for example with pesticides or agents for controlling phytopathogenic fungi or bacteria. Also of interest is the miscibility with mineral salt solutions which are employed for treating nutritional and trace element deficiencies. Non-phytotoxic oils and oil concentrates can also be added.

The mixtures according to the invention and the herbicidal compositions can be applied pre- or post-emergence. It is advantageous to apply the mixtures according to the invention post emergent when the crop has in general 1 to 6 leaves.

If the active ingredients are less well tolerated by certain crop plants, application techniques may be used in which the herbicidal compositions are sprayed, with the aid of the spray apparatus, in such a way that they come into as little contact, if any, with the leaves of the sensitive crop plants while reaching the leaves of undesirable plants which grow underneath, or the bare soil (post-directed, lay-by).

In the case of a post-emergence treatment of the plants, the herbicidal mixtures or compositions according to the invention are preferably applied by foliar application. Application may be effected, for example, by usual spraying techniques with water as the carrier, using amounts of spray mixture of approx.15 to 1000 l/ha. The mixtures or compositions may also be applied by the so-called "low-volume" and "ultra-low-volume" methods, or in the form of so-called granules.

As a rule, the synergistic herbicidal mixtures comprise components A), B) and, if desired, C) in such weight ratios that the synergistic effect takes place.

The ratios of component A) and B) in the mixture in general range from 1:0.001 to 1:500, preferably from 1:0.01 to 1:100, particularly preferably from 1:0.1 to 1:50. The ratios of components A) and C) in the mixture in general range from 1:0.002 to 1:800, preferably from 1:0.003 to 1:160, particularly preferably from 1:0.02 to 1:160.

The rate of application of pure synergistic herbicidal mixture, i.e. without formulation auxiliaries, amounts in general to 0.1 to 5000 g/ha, preferably 1 to 3000 g/ha, in particular 5 to 2500 g/ha, of active substance (a.s.), depending on the intended aim, the season, the target plants and growth stage.

The rate of application of imazamox is usually 0.1 to 200 g/ha, as a rule, 1 to 100 g/ha, preferably 2 to 100 g/ha, of active substance (a.s.).

The rate of application of chloro acetamide - e.g. metazachlor - is usually 50 to 5000 g/ha, as a rule 75 to 3000 g/ha, preferably 100 to 2000 g/ha, of active substance (a.s.).

The preferred application rates of the active ingredients of the optional component C) are compiled in the following table.

| Active ingredient C | Rate of application (g/ha) |
| --- | --- |
| Dichlormid | 100-600 |
| Benoxacor | 10-200 |
| LAB 145138 | 50-500 |
| MG-191 | 200-1000 |
| MON-13900 (Furilazole) | 10-300 |
| Naphtalicacidanhydride | 300-1000 |

(continued)

| Active ingredient C | Rate of application (g/ha) |
|---|---|
| Fenchlorim | 20-500 |
| Fenchlorazol | 5-100 |
| Mefenpyr-diethyl | 5-100 |
| Isoxadifen-ethyl | 1-100 |
| Cloquintocet-mexyl | 1-50 |
| AD 67 | 50-500 |
| R 29148 | 50-500 |

The herbicidal compositions and synergistic herbicidal mixtures according to the invention are very useful to control a broad spectrum of grass and broadleaf weeds. This usually leads to cleaner fields and higher purity of the harvested commodity as well as to higher yields of the respective crop, in particular brassica napus (oilseed rape, canola).

In particular brassica napus (oilseed rape, canola) seeds coming from fields treated with the herbicidal compositions and synergistic herbicidal mixtures according to the invention usually have higher seed purity. Based on current knowledge this may be due to the removal of unwanted brassica species.

A further advantage of the instant invention is the general reduction of tillage in the respective fields which - based on current knowledge - usually leads to less loss of soil by e.g. wind.

Examples

The mixtures according to the invention were applied pre- or post-emergence (foliar treatment). The herbicidal compounds of component A), B) and, if desired, of component C) were applied in the formulation in which they are present as commercially available product, e.g. Beyond or PULSAR 40 which is a Trademark of BASF and which is a liquid formulation containing imazamox as active ingredient; Raptor which is a trademark of BASF and which is imazamox formulated as 70 % WG or as liquid formulation; Butisan S which is a trademark of BASF and which is 500 g/l metazachlor formulated as SC.

The herbicidally active compounds of components A), B) were applied in succession or jointly, in the latter case in some cases as a tank mix and in some cases as a readymix, in the form of emulsions, aqueous solutions or suspensions, the vehicle being water (200 - 400 l/ha). In the case of the field trials, application was effected with the aid of a mobile plot sprayer.

The test period is specified in the respective tables.

Damage by the herbicidal compositions was evaluated with reference to a scale of 0% to 100% in comparison with untreated control plots. 0 means no damage and 100 means complete destruction of the plants (cf. numbers in the column "Control" in the following tables).

The following examples will demonstrate the action of the herbicidal compositions which can be used according to the invention, without excluding the possibility of other uses.

In these examples, the value E at which only an additive effect of the individual active ingredients is to be expected was calculated by the method of S. R. Colby (Calculating synergistic and antagonistic responses of herbicide combinations, Weeds 15, 20 pp (1967)).

This was done using the formula

$$E = X + Y - \frac{XY}{100}$$

where

X = Percentage of the herbicidal action of component A) at an application rate of a;

Y = Percentage of the herbicidal action of component B) at an application rate of b;

E = expected herbicidal action of component A) + B) at rates of application a + b (in %).

If the value observed exceeds the value E calculated in accordance with Colby's formula, then synergism is present.

For example the values in the columns "Control" in the following tables all show synergism.

The herbicidal mixtures according to the invention exert a greater herbicidal action than would have been expected according to Colby on the basis of the observed effects of the individual components when used alone.

Further abbreviations in the following tables and their meaning;

a.i.     active ingredient (e.g. imazamox)

GS     Growth Stage (according to "Compendium of Growth Stage Identification Keys for Mono- and Dicotyledonous Plants - Extended BBCH scale, 2nd Edition 1997 (ISBN 3-9520749-3-4)

eval.     evaluation after specified days after treatment

DAT     days after treatment

n     number of trials

GC     Ground Cover [% of ground]

n     "no"

y     "yes"

digits underneath of product name means rate of a.i. applied [g of pure ai/ha].

# Selectivity and herbicidal activity of Imazamox combinations pre-emergence in oilseed rape

## (H / 2001 / 102 / VTH / 008, 011, 014 - Mobile Trial Unit, Germany)

| rate in g a.i./ha | | | | Raptor | | | | Butisan S | Butisan S + Raptor 750 | | | Calculation on synergistic effects (Colby: E(expected value)=X+Y - (X·Y/100)) Butisan+Raptor | | | | | |
|---|---|---|---|---|---|---|---|---|---|---|---|---|---|---|---|---|---|
| | eval. | n | GC | 20 | 30 | 40 | 50 | 750 (1.5 l/ha) | +20 | +30 | +40 | 750+20 | | 750+30 | | 750+40 | |
| | | | | | | | | | | | | E | Syn. | E | Syn. | E | Syn. |
| winter rape | 1. | 3 | 7 | 0 | 0 | 0 | 0 | 0 | 0 | 0 | 0 | | | | | | |
| | 2. | 3 | 69 | 0 | 0 | 0 | 0 | 0 | 0 | 0 | 0 | | | | | | |
| | 3. | 3 | 54 | 0 | 0 | 0 | 0 | 0 | 0 | 0 | 0 | | | | | | |
| Ø grasses | | | | 25 | 36 | 43 | 65 | 99 | 100 | 100 | 100 | | | | | | |
| Alopecurus myosuroides | 3. | 1 | 1 | 25 | 35 | 42 | 62 | 99 | 100 | 100 | 100 | 99,25 | y | 99,35 | y | 99,42 | y |
| Apera spica-venti | 3. | 1 | 3 | 27 | 37 | 43 | 68 | 99 | 100 | 100 | 100 | 99,27 | y | 99,37 | y | 99,43 | y |
| Ø broadleaf weeds | | | | 50 | 66 | 73 | 88 | 90 | 98 | 98 | 99 | | | | | | |
| Arabidopsis thaliana | 3. | 1 | 2 | 32 | 40 | 47 | 82 | 96 | 99 | 97 | 99 | 97,28 | y | 97,6 | n | 97,88 | y |
| Capsella bursa-pastoris | 3. | 2 | 6 | 56 | 81 | 89 | 93 | 99 | 99 | 100 | 100 | 99,56 | n | 99,81 | y | 99,89 | y |
| Galium aparine | 3. | 1 | 1 | 30 | 72 | 82 | 89 | 96 | 96 | 98 | 100 | 97,2 | n | 98,88 | n | 99,28 | y |
| Geranium pusillum | 3. | 1 | 7 | 73 | 78 | 80 | 93 | 95 | 99 | 99 | 99 | 98,65 | y | 98,9 | y | 99 | n |
| Lamium amplexicaule | 3. | 2 | 2 | 73 | 79 | 84 | 94 | 98 | 100 | 100 | 100 | 99,46 | y | 99,58 | y | 99,68 | y |
| Matricaria inodora | 3. | 2 | 7 | 32 | 48 | 58 | 69 | 99 | 99 | 99 | 100 | 99,32 | n | 99,48 | n | 99,58 | y |
| Sinapis alba | 2. | 2 | 3 | 78 | 81 | 90 | 93 | 53 | 92 | 94 | 97 | 89,66 | y | 91,07 | y | 95,3 | y |
| Sisymbrium officinale | 3. | 1 | 1 | 53 | 63 | 68 | 90 | 55 | 97 | 99 | 99 | 78,85 | y | 83,35 | y | 85,6 | y |
| Stellaria media | 3. | 3 | 3 | 49 | 67 | 75 | 90 | 99 | 100 | 99 | 100 | 99,49 | y | 99,67 | n | 99,75 | y |
| Thlaspi arvense | 3. | 1 | 1 | 37 | 73 | 87 | 92 | 97 | 100 | 100 | 100 | 98,11 | y | 99,19 | y | 99,61 | y |
| Veronica triphyllos | 3. | 1 | 2 | 33 | 40 | 47 | 87 | 98 | 99 | 97 | 100 | 98,66 | y | 98,8 | n | 98,94 | y |

Raptor = 70 % imazamox, WG

Butisan = 500 g/l metazachlor, SC

1. Eval.: 7-19 DAT

2. Eval.: 67-68 DAT

3. Eval.: 202-206 DAT

EP 1 734 823 B2

## Selectivity and herbicidal activity of Imazamox combinations at spiking in oilseed rape

### (H / 2001 / 103 / VTH / 017, 018, 021 - Mobile Trial Unit, Germany)

| rate in g a.i./ha | | | | Raptor | | | | Butisan S 750 (1.5 l/ha) | + Raptor 750 | | | Calculation on synergistic effects (Colby: E(expected value)= X+Y-(X*Y/100)) Butisan+Raptor | | | | | |
|---|---|---|---|---|---|---|---|---|---|---|---|---|---|---|---|---|---|
| | | | | | | | | | | | | 750+20 | | 750+30 | | 750+40 | |
| | GS | eval. | n | GC | 20 | 30 | 40 | 50 | | +20 | +30 | +40 | E | Syn | E | Syn | E | Syn |
| winter rape | 10/12 | 1. | 3 | 7 | 0 | 0 | 0 | 1 | 0 | 1 | 1 | 2 | | | | | | |
| | | 2. | 3 | 26 | 0 | 0 | 1 | 5 | 1 | 3 | 5 | 11 | | | | | | |
| | | 3. | 3 | 70 | 0 | 0 | 0 | 0 | 0 | 0 | 0 | 0 | | | | | | |
| | | 4. | 3 | 68 | 0 | 0 | 0 | 0 | 0 | 0 | 0 | 0 | | | | | | |
| Ø broadleaf weeds | | | | | 76 | 85 | 86 | 94 | 98 | 98 | 100 | 100 | | | | | | |
| Capsella bursa-pastoris | -- | 4. | 2 | 6 | 86 | 93 | 96 | 97 | 98 | 97 | 100 | 100 | 99,72 | n | 99,86 | y | 99,92 | y |
| Geranium pusillum | 10/12 | 4. | 1 | 6 | 63 | 77 | 73 | 93 | 92 | 93 | 98 | 99 | 97,04 | n | 98,16 | n | 97,84 | y |
| Sisymbrium officinale | -- | 4. | 1 | 1 | 65 | 73 | 70 | 90 | 99 | 99 | 100 | 99 | 99,65 | n | 99,73 | y | 99,7 | n |
| Stellaria media | 9/12 | 4. | 3 | 3 | 76 | 87 | 89 | 95 | 99 | 98 | 100 | 100 | 99,76 | n | 99,87 | y | 99,89 | y |
| Veronica hederaefolia | 9/10 | 4. | 3 | 1 | 77 | 87 | 89 | 94 | 99 | 99 | 100 | 100 | 99,77 | n | 98,87 | y | 99,89 | y |
| Veronica persica | 9/10 | 4. | 2 | 4 | 89 | 95 | 97 | 97 | 99 | 99 | 99 | 100 | 99,89 | n | 99,95 | n | 99,97 | y |

Raptor = 70 % Imazamox, WG

Butisan = 500 g/l metazachlor, SC

1. Eval.: 6-19 DAT

2. Eval.: 21-25 DAT

3. Eval.: 55-60 DAT

4. Eval.: 185-196 DAT

EP 1 734 823 B2

# Selectivity and herbicidal activity of Imazamox combinations post-emergence in oilseed rape

## (H / 2001 / 104 / VTH / 028, 029 - Mobile Trial Unit, Germany)

| rate in g a.i./ha | | | | | Raptor* | | | | Butisan S | + Raptor** | | | Calculation on synergistic effects (Colby: E(expected value)= X+Y - (X*Y/100) Butisan+Raptor | | | | | |
|---|---|---|---|---|---|---|---|---|---|---|---|---|---|---|---|---|---|---|
| | | | | | | | | | 750 | 750 | | | 750+20 | | 750+30 | | 750+40 | |
| | | GS | eval. | n | GC | 20 | 30 | 40 | 50 | (1.5 l/ha) | +20 | +30 | +40 | E | Syn. | E | Syn. | E | Syn. |
| winter rape | 12/14 | 1. | 2 | 15 | 0 | 1 | 3 | 6 | 0 | 0 | 2 | 6 | | | | | | |
| | | 2. | 2 | 25 | 1 | 4 | 7 | 12 | 0 | 3 | 5 | 8 | | | | | | |
| | | 3. | 2 | 68 | 0 | 0 | 0 | 0 | 0 | 0 | 0 | 0 | | | | | | |
| | | 4. | 1 | 37 | 0 | 0 | 0 | 0 | 0 | 0 | 0 | 0 | | | | | | |
| Ø grasses | | | | | 77 | 78 | 84 | 88 | 0 | 88 | 90 | 96 | | | | | | |
| Agropyron repens | 11/13 | 4. | 1 | 1 | 77 | 78 | 84 | 88 | 0 | 88 | 90 | 96 | 77,00 | y | 78,00 | y | 84,00 | y |
| Ø broadleaf weeds | | | | | 65 | 76 | 83 | 90 | 63 | 83 | 95 | 96 | | | | | | |
| Geranium pusillum | 10/14 | 4. | 1 | 6 | 68 | 77 | 85 | 90 | 48 | 72 | 91 | 95 | 83,36 | n | 88,04 | y | 92,20 | y |
| Rumex acetosella | -- | 4. | 1 | 4 | 55 | 73 | 77 | 87 | 73 | 84 | 96 | 95 | 87,85 | n | 92,71 | y | 93,79 | y |
| Sisymbrium officinale | 10/12 | 4. | 1 | 1 | 73 | 78 | 87 | 92 | 68 | 93 | 97 | 97 | 91,36 | y | 92,96 | y | 95,84 | y |

* = + 1 l/ha Dash HC

Raptor = 70 % imazamox, WG

Butisan = 500 g/l metazachlor, SC

** = + 5 kg/ha Ammonium-sulfate

1. Eval.: 7-8 DAT

2. Eval.: 22 DAT

3. Eval.: 48-49 DAT

EP 1 734 823 B2

Post emergent control of Setfaria faberi
(solo herbicide application)

| Product Name | AI Rate (g/ha) | Control |
|---|---|---|
| 1 CHECK | | 0 |
| 2 BEYOND | 10.0 | 50 |
| 3 BEYOND | 20.0 | 63 |
| 4 BEYOND | 40.0 | 85 |
| 5 BUTISAN S | 188.0 | 0 |
| 6 BUTISAN S | 375.0 | 0 |
| 7 BUTISAN S | 750.0 | 0 |

Post emergent control of Setfaria faberi
(10 g/ha imazamox plus x g/ha co herbicide)

| Product Name | AI Rate (g/ha) | Control |
|---|---|---|
| BEYOND | 10.0 | 94 |
| BUTISAN S | 188.0 | |
| | | |
| BEYOND | 10.0 | 95 |
| BUTISAN S | 375.0 | |
| | | |
| BEYOND | 10.0 | 93 |
| BUTISAN S | 750.0 | |

Post emergent control of Setfaria faberi
(20 g/ha imazamox plus x g/ha co herbicide)

| Product Name | AI Rate (g/ha) | Control |
|---|---|---|
| BEYOND | 20.0 | 92 |
| BUTISAN S | 188.0 | |
| | | |
| BEYOND | 20.0 | 98 |
| BUTISAN S | 375.0 | |
| BEYOND | 20.0 | 99 |
| BUTISAN S | 750.0 | |

Post emergent control of Setfaria faberi
(40 g/ha imazamox plus x g/ha co herbicide)

| Product Name | AI Rate (g/ha) | Control |
|---|---|---|
| BEYOND | 40.0 | 99 |
| BUTISAN S | 188.0 | |
| | | |
| BEYOND | 40.0 | 99 |
| BUTISAN S | 375.0 | |

Post emergent control of Avena fatura
(herbicide solo application)

| Product Name | AI Rate (g/ha) | Control |
|---|---|---|
| CHECK | | 0 |

(continued)

Post emergent control of <u>Avena fatura</u>
(herbicide solo application)

| Product Name | AI Rate (g/ha) | Control |
|---|---|---|
| BEYOND | 10.0 | 30 |
| BEYOND | 20.0 | 30 |
| BEYOND | 40.0 | 38 |
| BUTISAN S | 188.0 | 33 |
| BUTISAN S | 375.0 | 32 |
| BUTISAN S | 750.0 | 30 |

Post emergent control of <u>Avena fatura</u>
(<u>40</u> g/ha imazamox plus x g/ha co herbicide)

| Product Name | AI Rate (g/ha) | AVEFA Control |
|---|---|---|
| BEYOND | 40.0 | 91 |
| BUTISAN S | 188.0 | |
| BEYOND | 40.0 | 89 |
| BUTISAN S | 375.0 | |
| BEYOND | 40.0 | 95 |
| BUTISAN S | 750.0 | |

**Claims**

1. A synergistic herbicidal mixture consisting of

   A) Imazamox, including its respective isomers a s well as its respective environmentally compatible salts or esters or amides or other derivatives;
   and
   B) at least one herbicidal compound of the group of chloro acetamides, which is selected from the group consisting of metazachlor, dimethachlor and pethoxamid,
   and, if desired,
   C) at least one herbicidal compound selected from the group consisting of clomazone, atrazin, dichlormid, benoxacor, LAB-145138, MG-191, MON-13900, cyometrinil, oxabetrinil, fluxofenim, flurazole, naphtalicacidanhydride, fenchlorim, fenchlorazol, mefenpyr, cloquintocet (including its hydrate(s)), 1-ethyl-4-hydroxy-3-(1$H$-tetrazol-5-yl)-1$H$-quinolin-2-one, 4-carboxymethyl-chroman-4-carboxylic acid, $N$-(2-methoxybenzoyl)-4-(3-methyl-ureido)-benzenesulfonamide, (3-oxo-isothiochroman-4-ylidenemethoxy)-acetic acid methyl ester including their respective isomers as well as their respective environmentally compatible salts or esters or amides or other derivatives.

2. A herbicidal composition consisting of a herbicidally active amount of a synergistic herbicidal mixture as claimed in claim 1, at least one inert liquid and/or solid carrier and, if desired, at least one further additive.

3. A method of controlling undesired vegetation, which comprises applying a synergistic herbicidal mixture as claimed in claim 1 before, during and/or after the emergence of undesired plants simultaneously or in succession.

4. A method as claimed in claim 3, used in crops.

5. A method as claimed in claim 4, wherein the crops are tolerant or resistant against the synergistic herbicidal mixture.

6. A method as claimed in claims 4 or 5, wherein the crop is brassica napus.

**Patentansprüche**

1. Synergistische herbizide Mischung, bestehend aus

A) Imazamox, einschließlich seiner entsprechenden Isomere und seiner entsprechenden umweltverträglichen Salze oder Ester oder Amide oder sonstigen Derivate; und
B) wenigstens einer herbiziden Verbindung aus der Gruppe der Chloracetamide, die ausgewählt sind unter Metazachlor, Dimethachlor und Pethoxamid, und, gegebenenfalls,
C) wenigstens einer herbiziden Verbindung, ausgewählt unter Clomazone, Atrazin, Dichlormid, Benoxacor, LAB-145138, MG-191, MON-13900, Cyometrinil, Oxabetrinil, Fluxofenim, Flurazol, Naphthalinsäureanhydrid, Fenchlorim, Fenchlorazol, Mefenpyr, Cloquintocet (einschließlich seines Hydrats oder seiner Hydrate), 1-Ethyl-4-hydroxy-3-(1*H*-tetrazol-5-yl)-1*H*-chinolin-2-on, 4-Carboxymethyl-chroman-4-carbonsäure, *N-(2-*Methoxybenzoyl)-4-(3-methyl-ureido)-benzolsulfonamid, (3-Oxo-isothiochroman-4-ylidenmethoxy)-essigsäuremethylester einschließlich seiner entsprechenden Isomere und seiner entsprechenden umweltverträglichen Salze oder Ester oder Amide oder sonstigen Derivate.

2. Herbizide Zusammensetzung, bestehend aus seiner herbizid wirksamen Menge einer synergistischen herbiziden Mischung nach Anspruch 1, wenigstens einem inerten flüssigen und/oder festen Träger und, gewünschtenfalls, wenigstens einem weiteren Additiv.

3. Verfahren zur Bekämpfung unerwünschten Pflanzenwuchses, wobei eine synergistische herbizide Mischung nach Anspruch 1 gleichzeitig oder nacheinander vor, während und/oder nach dem Auflaufen von unerwünschten Pflanzen appliziert wird.

4. Verfahren nach Anspruch 3, angewendet bei Kulturpflanzen.

5. Verfahren nach Anspruch 4, wobei die Kulturpflanzen gegenüber der synergistischen herbiziden Mischung tolerant oder resistent sind.

6. Verfahren nach einem der Ansprüche 4 oder 5, wobei die Kulturpflanze Brassica Napus ist.

**Revendications**

1. Mélange herbicide synergique, se composant de :

A) imazamox, y compris ses isomères respectifs ainsi que ses sels ou esters ou amides ou autres dérivés respectifs compatibles avec l'environnement, et
B) au moins un composé herbicide du groupe des chloro-acétamides, sélectionné parmi le groupe se composant de métazachlore, diméthachlore, et péthoxamide, et si souhaité
C) au moins un composé herbicide choisi dans le groupe constitué par la clomazone, l'atrazine, le dichlormide, le bénoxacor, LAB-145138, MG-191, MON-13900, le cyométrinil, l'oxabétrinil, le fluxofnim, le flurazole, l'anhydride d'acide naphtalique, le fenchlorim, le fenchlorazol, le méfenpyr, le cloquintocet (y compris son ou ses hydrates), 1-éthyl-4-hydroxy-3-(1H-tétrazol-5-yl)-1H-quinolin-2-one, l'acide 4-carboxyméthyl-chromane-4-carboxylique, N-(2-méthoxy-benzoyl)-4-(3-méthyl-uréido)-benzènesulfonamide, et l'ester méthylique d'acide (3-oxo-isothiochroman-4-ylidèneméthoxy)-acétique, y compris leurs isomères respectifs ainsi que leurs sels ou esters ou amides ou autres dérivés respectifs compatibles avec l'environnement.

2. Composition herbicide se composant d'une quantité herbicide active d'un mélange herbicide synergique selon la revendication 1, d'au moins un support liquide inerte et/ou solide inerte et, si souhaité, d'au moins un additif supplémentaire.

3. Procédé de lutte contre la végétation indésirable comprenant l'application d'un mélange herbicide synergique selon la revendication 1, avant, pendant et/ou après l'apparition de plantes indésirables, de façon simultanée ou en succession.

**4.** Procédé selon la revendication 3, utilisé dans des plantes cultivées.

**5.** Procédé selon la revendication 4, dans lequel les plantes cultivées tolèrent ou sont résistantes au mélange herbicide synergique.

**6.** Procédé selon la revend 4 ou 5, dans lequel la plante cultivée est brassica napus.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0008938 A1
- EP 1104241 B1
- US 5973154 B
- US 6339158 B1
- EP 0411408 A
- EP 0154204 A

### Non-patent literature cited in the description

- The Pesticide Manual. **C.D.S. TOMLIN.** Index. BCPC, 2003, vol. 5, 1337-1344
- **HOCK ; FEDTKE ; SCHMIDT.** Herbizide [Herbicides. Thieme, 1995
- *Dichlormid,* 263
- *Benoxacor,* 263
- *LAB-145138,* 263
- *MG-191,* 263
- *MON-13900,* 263
- *Cyometrinil,* 265
- *Oxabetrinil,* 265
- *Fluxofenim,* 265
- *Flurazole,* 265
- *Naphtalicacidanhydride,* 265
- *Fenchlorim,* 266
- *Fenchlorazol,* 266
- *Cloquintocet,* 266
- **S. R. COLBY.** Calculating synergistic and antagonistic responses of herbicide combinations. *Weeds,* 1967, vol. 15, 20
- Compendium of Growth Stage Identification Keys for Mono- and Dicotyledonous Plants - Extended BBCH scale. 1997